# EUROPEAN PATENT SPECIFICATION

(11) **EP 3 967 955 B1**
(45) Date of publication and mention of the grant of the patent: **19.02.2025**
(21) Application number: 20196275.0
(22) Date of filing: 15.09.2020
(51) Int. Cl.: F25C 3/00

(54) **TEMPORARY ENERGY STORAGE SYSTEM FOR COLD ENERGY**
TEMPORÄRES ENERGIESPEICHERSYSTEM FÜR KÄLTEENERGIE
SYSTÈME DE STOCKAGE D'ÉNERGIE TEMPORAIRE POUR L'ÉNERGIE FROIDE

(43) Date of publication of application: 16.03.2022
(73) Proprietor: Hochschule für angewandte Wissenschaften München, 80335 München (DE)
(72) Inventor: Ziegler, Franz Josef, 86504 Merching (DE)
(74) Representative: Lucke, Andreas

(56) References cited:
- JP-A- 2010 121 854
- JP-A- H0 921 579
- JP-A- H0 933 149
- JP-A- H02 154 964
- JP-A- H06 147 563
- JP-B2- H 076 723
- EDWARD SHEA ET AL: "Calibration of Snowmaking Equipment for Efficient Use on Virginia's Smart Road", 4 August 1999 (1999-08-04), XP055482995, Retrieved from the Internet <URL:https://vtechworks.lib.vt.edu/bitstream/handle/10919/44622/TOC_CH1_CH2_CH3.PDF?sequence=4&isAllowed=y> [retrieved on 20180611]

## Description

### FIELD OF THE INVENTION

The present invention is in the field of temporary energy storage systems. More precisely, the present invention relates to a power-to-cold energy storage system for temporarily storing energy by inducing a phase transition in a storage medium.

### BACKGROUND

The transition from combustible energy sources to renewable energies is generally accompanied by the challenge of handling a fluctuating supply of energy. For example, power plants based on wind or solar radiation rely on temporally varying natural phenomena and therefore inherently provide a temporarily varying supply of energy. Sector coupling can combine different energy sources to balance out the fluctuating energy supply. However, it is unlikely that a constant and reliable energy supply will be achieved without temporary energy storage, which can be charged and discharged based on demand, to temporally decouple energy generation and energy consumption.

In Germany, 13% of the generated electrical energy is consumed for refrigeration. Hence, power-to-cold energy storage systems could cover a significant portion of an excess capacity of a power network. Moreover, storing power through the refrigeration of carrier liquids can be efficient and compact, such as by converting water to ice and temporarily storing the resulting ice or ice-water slurry with high energy density due to the high latent heat of ice.

For example, CH 628 417 A5 discloses a cold reservoir, wherein surfaces of a heat exchanger are exposed to water to create an ice layer on the heat exchanger. The ice layer can then be removed from the heat exchanger by injecting a hot gas or liquid into the heat exchanger and thereby partially melting the ice layer at the interface to the heat exchanger. The ice layer then detaches from the heat exchanger and is collected on the surface of a water reservoir in a tank to form an ice-slurry. Alternatively, the ice layer may be removed from the heat exchanger by mechanical deformation or scraping of the ice.

As another example, Steffan et al. ("Highest Efficiency Ice Storage for Solar Cooling Systems-Experiences with a Vacuum Ice-slurry Cold Thermal Energy Storage*")* have proposed a power-to-cold storage based on vacuum-evaporation of water in a tank. The vacuum induces a cooling of the water when gaseous water molecules evaporate due to the extracted latent heat of vaporization, and ice crystals are subsequently formed in the water.

The resulting ice-slurry can be transferred to a storage tank or directly transferred to a heat exchanger.

JP 2010 121854 A discloses a seasonal cold storage. In the winter season, cold air enters into a snow silo and a snowfall nozzle is driven to generate snow in the snow silo. Heat exchange with the cold air in the snow silo can be used for cooling in the summer season.

JP H09 33149 A discloses an ice thermal storage device. The system comprises two water coolers opposite each other for over-cooling water into a super cooled state and discharging the super cooled water such that the jets collide and create an ice slurry. The ice slurry is collected in a tank between the water coolers. A discharge port may discharge cold air towards the collision point to guide the supercooled water into the tank.

JP H06 147563 A discloses a seasonal snow storage with vents for letting in air into an enclosure and a sprayer for spraying water into the air and form snow. A collection hopper collects the snow into a falling supply shooter as a conveying means towards an underground ice thermal storage tank. The low-temperature atmosphere in the icemaker can be supplemented by a cooling loop, which cools the air proximate the sprayer for generating the snow.

JP H09 21579 A discloses an ice thermal storage device based on supercooled water sprayers. Instead of a collision of the supercooled water jet with a collision object, nozzles provide pressurized air to collide with the supercooled water to generate an ice slurry.

JP H02 154964 A discloses a seasonal cold storage system. Cold air is used during winter to generate snow with a high pressure water nozzle. Crops in a compartment of the storage can be cooled by the snow in summer, while molten snow water is drained via the drain port.

Shea et al ("Calibration of Snowmaking Equipment for Efficient Use on Virginia's Smart Road*")* discloses techniques for the Calibration of Snowmaking Equipment for Efficient Use on Virginia's Smart Road.

JPH076723B2 discloses a snow-making and air-conditioning system for use in indoor ski resorts in areas where it does not snow.

### SUMMARY OF THE INVENTION

However, the known systems and methods based on ice generation and storage are associated with inherent shortcomings. Generating ice sheets at the surfaces of a heat exchanger is intrinsically cyclic, as the efficiency of the ice generation reduces with increasing ice thickness due to the heat insulating property of the ice layer. The removal of the ice layer on the other hand is associated with thermal losses, or requires additional mechanical energy. Further, the repeated generation and removal of ice from the heat exchanger can induce wear in the storage system.

While the direct generation of ice-slurry by vacuum-evaporation overcomes these shortcomings of ice accumulation on the surfaces of the heat exchanger, the volumetric refrigeration capacity of the associated system is low and depends on large turbo compressors. For example, a prototype of this system in Dresden employs a 1,3 m diameter turbo compressor for inducing an ice-slurry in a 6 m³ water storage tank at a refrigeration capacity of 50 kW.

In view of this prior art, the object of the invention is to provide a cheap and efficient energy storage system and a corresponding method which should be simple and robust in operation as well as being scalable to refrigeration capacities in the MW range.

This object is solved by a temporary energy storage system and a temporary energy storage method according to the independent claims. The dependent claims relate to preferred embodiments.

According to a first aspect, the invention relates to a temporary energy storage system. The temporary energy storage system comprises a thermal storage tank for storing water, a chiller comprising a heat exchanger of an evaporator of a heat pump configured for generating cooled air in the thermal storage tank, and a snow generator for generating snow particles suspended in the cooled air, such that the snow particles settle on the water stored in the thermal storage tank for forming a snow layer on the water. The chiller and the snow generator are arranged in a separated part of the temporary energy storage system, and the snow generator comprises a fan for generating a stream of cooled air from the chiller through the snow generator and out of the separated part into the thermal storage tank, and wherein the snow generator is further configured to inject water into the stream of cooled air.

As opposed to the prior art ice storage systems, latent heat may be stored in snow particles which can be formed in a cooled airstream and can therefore be spatially disconnected from heat exchangers. Hence, the temporary energy storage system may operate at constant refrigeration capacity. When the snow particles settle on the water in the thermal storage, a snow layer may be formed and may mix with the water, such as to result in a pumpable water/ice-slurry mixture which may store energy within the latent heat of the crystallized water.

Snow generators have been applied in their technical field with a focus on a large snow throughput, e.g. in snowmaking for ski slope preparation. Hence, the invention can advantageously apply previous technical advances in the technical field of snowmaking for winter sports to provide robust energy storage at high refrigeration capacity and high storage density.

The artificially generated snow particles may be stored with the water in the thermal storage tank, which may comprise thermally isolating walls (of the thermal storage tank), such that the water and/or cooled air is thermally isolated from the surrounding environment and the temperature of the water may be substantially maintained.

The skilled person will appreciate that reference is made to "water" for the sake of conciseness only, while no limitation is intended on the constituents or physical state of the water. Instead, the skilled person will appreciate that the reference to water may include crystalline water components (e.g. snow or ice) and that the water or water/ice-slurry mixture may include arbitrary additives, e.g. for adjusting the freezing point or for affecting the nucleating dynamics of snow particles, such as salts or proteins. In other words, the term "water" as used in the present disclosure should be understood broadly as any water-based and at least partially liquid mixture supporting the generation of snow particles therefrom. In some embodiments, the water-based and at least partially liquid mixture stored in the thermal storage tank may be primarily composed of ice to store energy at a high energy density, e.g. the water may temporarily feature ice contents of 50% or more in operation. External power is stored in the temporary energy storage system by transforming (electrical) energy to cold energy using the chiller. The chiller comprises a heat exchanger of an evaporator, such as an ammonia evaporator, to provide cooled air at a high refrigeration capacity. For example, the chiller may generate cooled air at a temperature of between about o °C to about -20 °C, such as between about -3 °C to about -10 °C. The air may be drawn in from the thermal storage tank and cooled to supply cooled air to the snow generator for creating suitable environmental conditions for snow particle aggregation.

In other words, the chiller generates a stream of cooled air in which snow particles may be created with the snow generator. The snow generator may locally expand air and/or water to create snow nuclei in the cooled air, and the snow particles may aggregate around the snow nuclei while suspended in the cooled air. In particular, the snow generator may generate a mist of snow nuclei and water in the cooled air and the snow particles may aggregate in the mist before the snow particles settle on the water (i.e. during the hang time of the mist/snow nuclei in the cooled air).

In preferred embodiments, the snow generator comprises a nucleation nozzle for ejecting air and/or a water, such that snow nuclei are formed in the cooled air for aggregating snow particles.

Upon expansion through the nucleation nozzle, the air and/or water may cool and snow nuclei may be formed. In some embodiments, the nucleation nozzle ejects a mixture of water and air for generating snow particles (so called internal mixing nozzle) into the stream of cooled air. In some embodiments, different nozzles for expanding air and water are arranged in the snow generator and the streams of expanded air and expanded water from the nozzles cross in the cooled air for forming snow nuclei (so called external mixing snow generator). For example, a snow cannon used for artificial snow generation for ski slope preparation may comprise a plurality of nozzles for ejecting air and for ejecting water through different nozzles and may further comprise nucleation nozzles for ejecting a mixture of air and water in order to generate snow nuclei in a stream of cooled air.

In preferred embodiments, the snow generator comprises a compressor for generating compressed air, wherein the compressed air is expanded through the nucleation nozzle to generate snow nuclei for aggregating snow particles.

The compressor may draw in air from the thermal storage tank which may be expanded by the nucleation nozzle with or without additional water for generating snow nuclei in the cooled air.

In principle, the snow generator may be a snowmaking gun used for ski slope preparation, such as a snow lance or a fan gun, in particular a snow cannon, depending on the size and shape of the thermal storage tank. For example, when the thermal storage tank provides a vertical hang time sufficient for snow particle aggregation, a snow lance may be installed within the thermal storage tank to generate snow particles in the stream of cooled air.

The snow generator comprises a fan for generating a stream of cooled air from the chiller through the snow generator and into the thermal storage tank.

For example, in large thermal storage tanks providing a lateral throwing distance of at least 5 m, in particular a lateral throwing distance of at least 10 m, such as 20 m, a snow cannon may be employed for generating snow particles at a comparatively high refrigeration capacity, wherein the fan draws in the cooled air from the chiller for blowing a mist of cooled air and snow nuclei into the thermal storage tank thereby aggregating snow particles within said mist over the throwing distance.

In preferred embodiments, the snow generator draws the water from the thermal storage tank for generating snow particles.

The water from the thermal storage tank may be drawn in by a pump directly from the thermal storage tank, or may be drawn in from additional conduits connected to a heat exchanger, e.g. from return conduits after the water has exchanged heat with an external fluid. Preferably, the water for the snow generator is directly drawn in from the thermal storage tank, such that the temperature of the water may be close to the freezing point, e.g. substantially between 4°C and the freezing point, such as a freezing point of o °C or -3 °C. The water may be pressurized by the pump to eject the water at an increased pressure, such as at least 5 bar, at least 10 bar, or at least 15 bar, e.g. a water pressure between 8 bar and 60 bar.

The water may be injected into the stream of cooled air for generating a cooled mist by associated water nozzles, and snow particles may aggregate within the cooled mist before settling on the water in the thermal storage tank. The aggregated snow particles may initially cool the water in the thermal storage tank and may subsequently form a snow layer on the surface of the water.

The artificial snow particles generated with a snow generator may lack the hexagonal symmetry of natural snow(-flakes) and may feature increased density. For example, artificial snow generated with a snow cannon may feature a density of about 300-500 kg/m³ and the snow particles may have a substantially circular shape. Hence, artificial snow particles can provide higher energy storage density than naturally occurring snow particles/snowflakes. Moreover, the storage density may be increased by increasing the water content of the snow particles, e.g. by adjusting parameters of the snow generator for increasing the water content of the snow particles.

In preferred embodiments, the system further comprises a sprinkler for wetting the snow layer, wherein the sprinkler in particular draws in water from the thermal storage tank for wetting the snow layer with said water.

The water may densify the snow layer and may crystallize for forming a dense ice/snow layer with a density of up to about 800 kg/m³. Hence, the energy storage density of the thermal storage system may be further increased with the sprinkler. The sprinkler may be coupled to conduits of a heat exchanger, such that recirculating water can be sprinkled onto the snow layer for cooling the recirculated water and for densifying the snow layer by partially melting the same. Wetting the snow layer with the sprinkler may also increase an energy exchange rate between the snow layer and the water, and may thus be selectively performed to reduce the temperature of the water.

In preferred embodiments, the system further comprises an agitator to agitate the water in the thermal storage tank, such that the snow layer is displaced in the thermal storage tank and/or mixed with the water.

The agitator may displace the snow layer, such that the snow layer may be distributed throughout the thermal storage tank and such that the snow layer may be mixed with the water for forming a pumpable ice-slurry. The ice-slurry may be transferred through conduits for exchanging heat with an external fluid.

In preferred embodiments, the thermal storage tank is coupled to conduits for extracting the water from the thermal storage tank, wherein the conduits are in particular coupled to a heat exchanger to cool a fluid in an external cooling system.

The water/ice-slurry in the thermal storage tank may be extracted from the tank at a temperature of e.g. o °C with a pump and may be pumped towards a heat exchanger for exchanging heat with a fluid in an external cooling network. For example, the cold energy stored in the temporary energy storage system may be transferred to a district cooling network, may be employed for server cooling in a datacenter, or for refrigerating food items. In some embodiments, the fluid is air and the cold energy stored in the temporary energy storage system is employed for providing cold energy to an air conditioning system. In some embodiments, the water/ice-slurry stored in the thermal storage tank is employed as a heat exchange medium for directly exchanging heat with a consumer, e.g. in a district cooling network.

In preferred embodiments, the thermal storage tank comprises artificial snow nuclei or a snow inducer, in particular snow inducing proteins, for increasing a nucleation temperature of the snow particles.

As the storage tank may provide a closed environment not subject to environmental regulations, the snow particle generation may be enhanced with a range of additives in the water. For example, snow inducing Pseudomonas syringae proteins may be added to the water for increasing a nucleation temperature of the water by up to 4-5 °C. As another example, silver iodide particles may be employed as artificial snow nuclei. Hence, the efficiency of the snow generator may be increased due to additives in the water used to nucleate and/or aggregate the snow particles.

Further, additional additives, such as salt, urea, and/or ammonium nitrate, may be added for reducing the freezing point of the water such that the temperature of the pumpable water may be reduced for application specific requirements. For example, the freezing point of the water may be reduced to a temperature below o °C using additives for freezing food items.

The chiller comprises an evaporator of a heat pump.

The temporary energy storage system may provide a heat reservoir for the heat pump. The temporary energy storage system may accordingly be a part of a composite power-to-heat and power-to-cold system.

In preferred embodiments, the system is configured to exchange the water with an external reservoir.

When the chiller comprises an evaporator of a heat pump, the water may be exchanged with the external reservoir in the event of low cold energy consumption and accumulation of the snow layer in the tank. Hence, the water/ice-slurry in the tank may be renewed following exchange of the water with the external reservoir, such as a lake or river.

In preferred embodiments, the thermal storage tank further comprises a heat exchanger to directly exchange heat with the water for cooling said water.

The heat exchanger may cool the water during a start-up of the temporary energy storage and/or when the temperature of the water is above a start-up temperature, such as 4 °C or above o °C. Direct exchange of heat with the water may be more efficient than storing the energy in the latent heat of the snow particles when the temperature of the water is above the start-up temperature.

According to a second aspect, the invention relates to a method for temporarily storing energy. The method comprises providing water in a thermal storage tank, generating cooled air in a separated part using a chiller comprising an evaporator of a heat pump , and generating snow particles suspended in the cooled air, comprising injecting water into the stream of cooled air, such that the snow particles settle on the water stored in the thermal storage tank and thereby forming a snow layer on the water.

In preferred embodiments, the method further comprises wetting the snow layer with the water.

In some embodiments, the method further comprises drawing the water from the thermal storage tank for wetting the snow layer with the water.

The method further comprises generating a stream of cooled air from a chiller through a snow generator and into the thermal storage tank with a fan.

In preferred embodiments, the method further comprises forming snow nuclei in the cooled air for aggregating snow particle by ejecting air and/or water through a nucleation nozzle.

In preferred embodiments, the method further comprises expanding compressed air through the nucleation nozzle to generate snow nuclei for aggregating snow particles.

In preferred embodiments, the method further comprises drawing in water from the thermal storage tank for generating snow particles.

In preferred embodiments, the method further comprises agitating the water, such that the snow layer is displaced in the thermal storage tank and/or mixed with the water.

In preferred embodiments, the method further comprises adding artificial snow nuclei or a snow inducer to the water, in particular snow inducing proteins, for increasing a nucleation temperature of the snow particles.

In preferred embodiments, the method further comprises extracting the water from the thermal storage tank through conduits, wherein the conduits are in particular coupled to a heat exchanger to cool a fluid in an external cooling system.

In preferred embodiments, the method further comprises driving an evaporator of a heat pump for generating the cooled air at the evaporator.

In preferred embodiments, the method further comprises exchanging the water with an external reservoir.

### DETAILED DESCRIPTION OF EMBODIMENTS

The features and numerous advantages of the system and corresponding method according to the present invention will best be understood from a detailed description of preferred embodiments with reference to the accompanying drawings, in which:
- Fig. 1: schematically illustrates an example of a temporary energy storage system;
- Fig. 2: illustrates a schematic flow diagram of a method for temporarily storing energy;
- Fig. 3: schematically illustrates another example of a temporary energy storage system;
- Fig. 4: illustrates a schematic example of a separated part of a temporary energy storage system for generating snow particles;
- Fig. 5: illustrates another schematic example of a temporary energy storage system in a partial view; and
- Fig. 6: illustrates another example of a temporary energy storage system coupled to a heat pump.

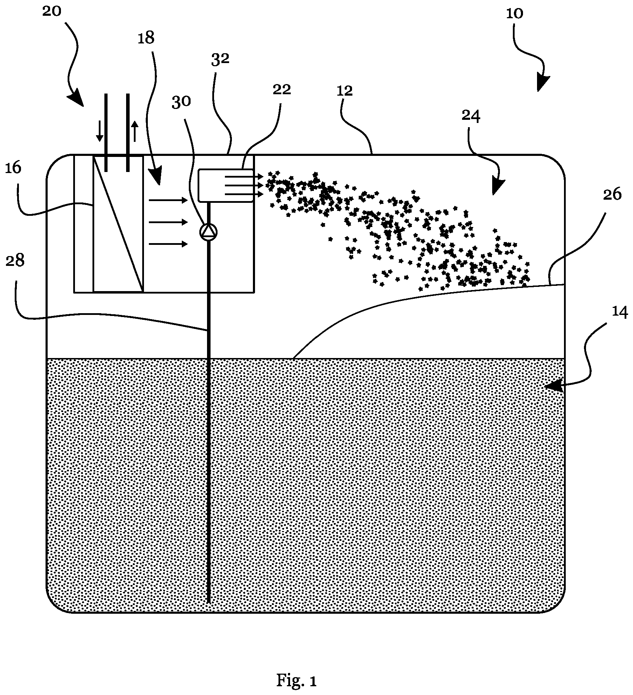

Fig. 1 schematically illustrates an example of a temporary energy storage system 10. The temporary energy storage system 10 comprises a thermal storage tank 12 for holding water 14, a chiller 16 for generating a stream of cooled air 18 by exchanging heat with a refrigerant supplied via refrigerant conduits 20, and a snow generator 22. The stream of cooled air 18 can pass through the snow generator 22 and into the thermal storage tank 12 for generating snow particles 24 suspended in the cooled air 18.

The snow particles 24 may settle on the water 14 for forming a snow layer 26. The snow layer 26 may be mixed with the water 14 for cooling the water 14 towards its freezing point and for forming a pumpable ice-slurry, such that cold energy may be stored in the latent heat of crystalline water particles. The water 14 may be pumped from the bottom of the thermal storage tank 12 towards the snow generator 22 via conduits 28 with a pump 30, such that the temporary energy storage system 10 may operate in a closed loop by transforming the water 14 with low ice content from the bottom of the thermal storage tank 12 into snow particles 24.

The chiller 16 and the snow generator 22 are arranged within a separated part 32 of the temporary energy storage system 10 which may be a separated part 32 of the thermal storage tank 12 or may be a separated compartment external to the thermal storage tank 12 and coupled to the thermal storage tank 12 via conduits or hatches.

The chiller 16 may draw in the air from the interior of the thermal storage tank 12, e.g. with a compressor or fan (not shown), and may feature heat exchanging elements (not shown) for cooling the air drawn in from the thermal storage tank 12 and for generating the stream of cooled air 18 towards the snow generator 22. Additionally or alternatively, the snow generator 22 may draw in cooled air from the chiller 16, and comparatively warmer air may flow into the chiller 16 via an inlet due to the resulting negative pressure. The chiller 16 may be an evaporator for evaporating the refrigerant supplied via the refrigerant conduits 20. The latent heat of evaporation for evaporating the refrigerant may be drawn from the air in the thermal storage tank 12 and may therefore produce cooled air 18 at the chiller 16. For example, the chiller 16 may be an ammonia evaporator evaporating ammonia supplied via the refrigerant conduits 20 for generating cooled air 18 in the separated part 32.

The snow generator 22 is coupled to the stream of cooled air 18, e.g. by drawing in the stream of cooled air 18 with a fan (not shown), and the temperature of the cooled air 18 may be selected for creating suitable environmental conditions for snow particle aggregation. Snow particles 24 may form below a temperature of about 3°C. However, the efficiency of the snow generator 22 may be temperature dependent, such that the stream of cooled air 18 is preferably associated with a temperature of below o°C or below -3°C. Nonetheless, the temperature of the stream of cooled air 18 may also be higher, for example in the case of additives in the water 14 increasing the snow particle nucleation temperature.

Preferably, the snow generator 22 ejects compressed air and water 14 into the stream of cooled air 18 via nozzles for generating a cooled mist of snow nuclei and water in the stream of cooled air 18. The ejected water 14 may aggregate into snow particles 24 around the snow nuclei while suspended in the stream of cooled air 18 before the snow particles 24 settle on the snow layer 26. The snow layer 26 may cool the water 14 towards the freezing point and subsequently store cold energy within the latent heat of the snow layer 26. Commercially available snow cannons for snowmaking can produce serval cubic meters of snow per hour, e.g. 50 m³/h or more, and may thus be compatible with a refrigeration capacity in the MW range.

The thermal storage tank 12 may comprise a liquid-tight concrete tank for holding the water 14 which may be thermally insulated to passively maintain the temperature of the water 14 in the thermal storage tank 12. The thermal storage tank 12 may be situated below a technical center of an industrial cold energy consumer and may thus complement the operation of a (central) refrigeration facility. The thermal storage tank 12 may have vertical and/or lateral dimensions of at least 5 m to accommodate a throwing distance of the snow generator 22 for a refrigeration capacity in the MW range. However, the temporary energy storage system 10 may also be scaled to lower dimensions by adjusting the snowmaking process to form snow particles 24 at reduced hang time, e.g. by increasing a ratio of compressed air to ejected water or by providing additives in the water, and comparatively smaller temporary storage systems 10 may accordingly be provided depending on the demand of the cold energy consumer. Thus, a versatile temporary energy storage system 10 may be provided with simple technical means. The temporary energy storage system 10 may store cold energy at a selectable refrigeration capacity which can be selected via the operation point of the chiller 16 and of the snow generator 22, while the system 10 may benefit from increased volumetric cold energy storage capacity due to the storing of cold energy within the latent heat of snow/ice. At the same time, the water 14 may constitute a pumpable heat exchange liquid for delivering the stored cold energy to external system in a controllable fashion.

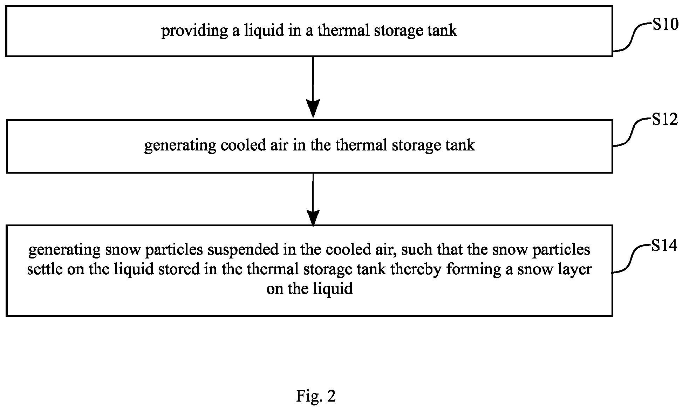

Fig. 2 illustrates a schematic flow diagram of a method for temporarily storing energy. The method comprises providing water 14 in a thermal storage tank 12 (S10), and generating cooled air 18 in the thermal storage tank 12 (S12). The method further comprises generating snow particles 24 suspended in the cooled air 18, such that the snow particles 24 settle on the water 14 stored in the thermal storage tank 12 thereby forming a snow layer 26 on the water 14 (S14).

The method may comprise thermally isolating the water 14 in the thermal storage tank 12, e.g. by storing the water 14 in a thermal storage tank 12 featuring heat insulating walls for preventing a heat exchange with the surrounding environment. In addition, the method may comprise pumping the water 14 towards the snow generator 22 for ejecting the water 14 into the stream of cooled air 18 for nucleating and aggregating snow particles 24. The method may further comprise inducing a mixing of the snow layer 26 and the water 14 for improving a heat exchange between the snow layer 26 and the water 14 and/or for densifying the snow layer 26, such as to form an ice-slurry in the thermal storage tank 12.

In addition, the method may comprise adding additives to the water 14 for increasing a nucleation temperature of the snow particles 24, such as snow inducers, or for adjusting the freezing point of the water 14. For example, salt may be added to the water 14 for reducing the freezing point of the water 14 when the system 10 is coupled to an external freezer. Accordingly, the system 10 may be adapted to application specific temperature requirements by adjusting the additive content in the water 14, thereby allowing the temporary energy storage system 10 to complement different cooling applications.

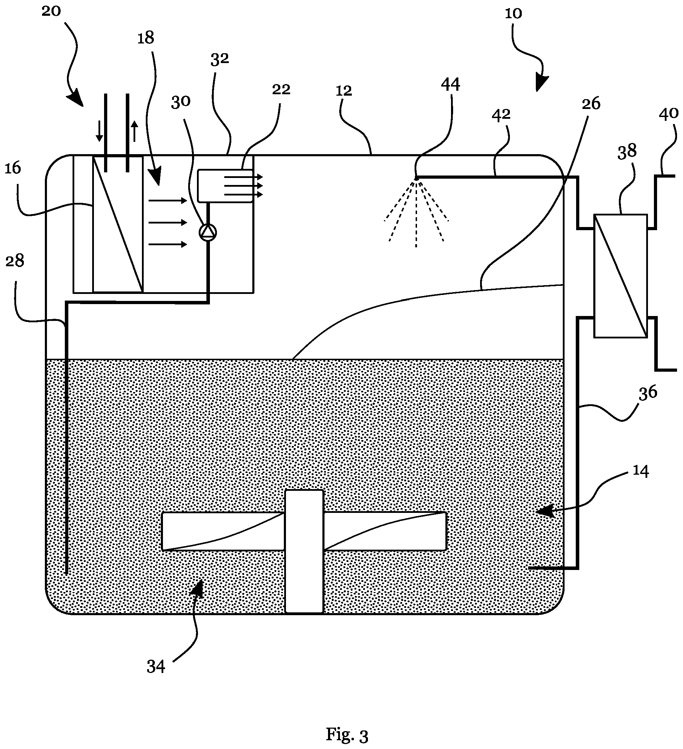

Fig. 3 schematically illustrates another example of a temporary energy storage system 10. Similar to the operation of the system 10 shown in Fig. 1, cold energy can be stored by generating a snow layer 26 on the water 14 with a snow generator 22. A chiller 16 can draw in air from the thermal storage tank 12 and the resulting stream of cooled air 18 can be supplied towards the snow generator 22. Additionally, a pump 30 may pump water 14 via conduits 28 towards the snow generator 22 for generating snow particles 24 suspended in the stream of cooled air 18 (not shown). The snow particles 24 may settle on the water 14 for forming the snow layer 26.

An agitator 34 may be arranged in the thermal storage tank 12 for agitating the water 14 and for displacing the snow layer 26. By agitating the water 14, the snow layer 26 may be distributed throughout the thermal storage tank 12 for providing a more uniform heat exchange between the water 14 and the snow layer 26. In addition, driving the agitator 34 may mix the snow layer 26 and the water 14 for further increasing a heat transfer and for inducing an ice-slurry. The ice-slurry may provide denser energy storage while still being pumpable, such that the ice-slurry in the water 14 may be employed for energy exchange with external systems. While the agitator 34 is illustrated as a mechanical agitator 34, the skilled person will appreciate that other types of agitators, such as air conduits for inducing a motion of the water 14 by creating air bubbles, may equally be used for agitating the water 14.

As illustrated in Fig. 3, the thermal storage tank 12 may be coupled via extraction conduits 36 to a heat exchanger 38 which in turn may be coupled to external fluid conduits 40 for exchanging heat between the water 14 and an external fluid, e.g. a cooling liquid. The water 14 may be extracted from the thermal storage tank 12 at a temperature close to the freezing point of the water 14, such as o °C or -3 °C, for cooling the external fluid in the external conduits 40 towards the same or a higher temperature, e.g. 6 °C for refrigeration applications or 12 °C for air conditioning applications. After passing the heat exchanger 38, the water 14 may be returned towards the thermal storage tank 12 via return conduits 42.

As further illustrated in Fig. 3, the system 10 may also comprise a sprinkler 44 for wetting the snow layer 26 on the water 14. Artificially created snow may have a density of about 300-500 kg/m³. By wetting the snow layer 26, the snow layer 26 may partially melt and the water wetting the snow layer 26 may (re-)freeze, such that a densified snow layer 26 may be created. In addition, wetting the snow layer 26 with the sprinkler 44 may induce mixing of the snow layer 26 with the water 14 to induce a pumpable ice-slurry.

The sprinkler 44 may be coupled to a return conduit 42 of the heat exchanger 38. Hence, the water returned via the return conduits 42 from the heat exchanger 38 may be sprinkled onto the snow layer 26 at an increased temperature, such as to efficiently cool the water returned via the return conduits 42 while densifying the snow layer 26.

Hence, the temporary energy storage system 10 may provide dense cold energy storage by selectively mixing the snow layer 26 formed on the water 14 with the agitator 34 and/or with the sprinkler 44.

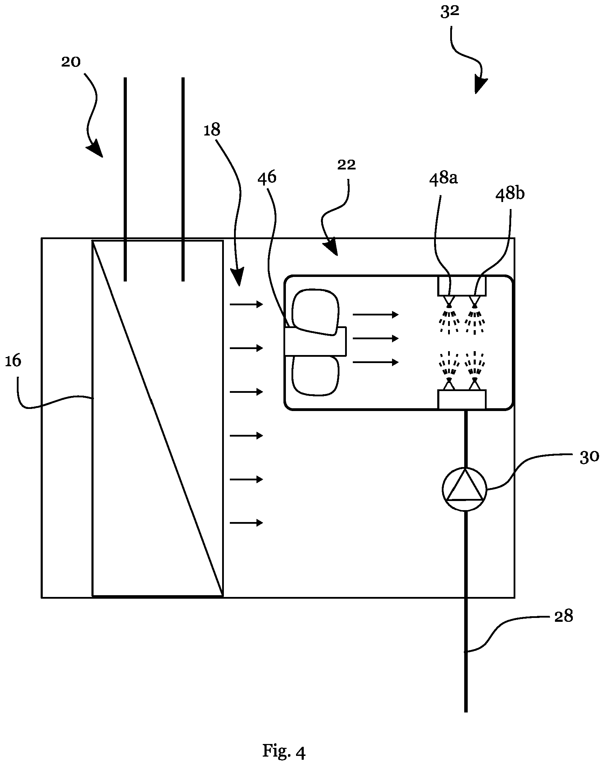

Fig. 4 illustrates a schematic example of a separated part 32 of a temporary energy storage system 10 for transferring power to cold energy and for generating snow particles 24. The separated part 32 accommodates a chiller 16 coupled to refrigerant conduits 20 for generating cooled air 18 in the separated part 32. The separated part 32 further accommodates a snow generator 22 comprising a fan 46 for drawing in the cooled air 18 and generating a stream of cooled air 18 through the snow generator 22. The snow generator 22 further comprises a plurality of nozzles 48a, 48b for ejecting water and/or air into the stream of cooled air 18 for creating snow nuclei and for generating snow particles 24 suspended in the stream of cooled air 18.

The plurality of nozzles 48a, 48b may comprise nucleation nozzles for mixing compressed air and water 14 drawn in from the thermal storage tank 12 and for ejecting the mixture of compressed air and water into the stream of cooled air 18 in order to create snow nuclei. The water 14 may be drawn in via conduits 28 with a pump 30 and the compressed air may be air from the thermal storage tank 12. For example, the snow generator 22 may comprise an internal compressor (not shown) for compressing air in the snow generator 22. Upon expansion, the compressed air/air-water mixture may cool, thereby inducing snow nuclei within the stream of cooled air 18.

Additionally or alternatively, the plurality of nozzles 48a, 48b may comprise nozzles for ejecting compressed air or water into the stream of cooled air 18, such that streams of the expanding air and the ejected water droplets cross in the snow generator 22 for generating snow nuclei. Additional water nozzles 48a, 48b may be provided for spraying water into the stream of cooled air 18, such as to provide a mist of water droplets in the stream of cooled air 18.

The stream of cooled air 18 may carry the mist of the snow nuclei and water droplets ejected from the plurality of nozzles 48a, 48b into the thermal storage tank 12, such that water molecules may aggregate around the snow nuclei for forming snow particles 24 while the required latent heat can be extracted from the stream of cooled air 18.

The stream of cooled air 18 leaving the separated part 32 may feature a temperature below the freezing point of the water 14, such as -3 °C or -10 °C, such that a snowmaking process via the snow generator 22 may be performed efficiently at suitable environmental conditions, effectively increasing a refrigeration capacity of the temporary energy storage system 10. For example, commercially available snow cannons may generate up to about 50 m³/h of snow when the temperature of the ambient air is at about -10 °C. In the temporary energy storage system 10, the ambient air temperature can be adjusted through the chiller 16, such that suitable environmental conditions for snowmaking may be artificially created by controlling the temperature and humidity of the stream of cooled air 18 supplied from the chiller 16 into the thermal storage tank 12. Hence, the environmental conditions in the thermal storage tank 12 may approximate optimal environmental conditions for snow making, such that the water 14 can be transformed into snow particles 24 at high efficiency/refrigeration capacity.

In some embodiments, snow inducers or artificial snow nuclei may be added as additives to the water 14, such that a nucleation temperature for creating snow nuclei may be increased. Hence, the efficiency and/or refrigeration capacity of the snow generation process may be further improved.

The snow generator 22 may comprise the fan 46 for generating the stream of cooled air 18 past the plurality of nozzles 48a, 48b, similar to the operation of a snow cannon which draws in cold air from the surrounding environment for expelling a mist of snow nuclei and water droplets onto ski slopes for generating artificial snow particles 24. The fan 46 may increase the flow of the stream of cooled air 18 and may thus increase a throughput of the snow generator 22. Additionally or alternatively, air may be drawn into the chiller 16 and the resulting stream of cooled air 18 may be blown out of the separated part 32 through an opening associated with a snow generator 22 which may not feature a fan 46, such as a snow lance. In some embodiments, the chiller 16 and the snow generator 22 are integrated into a composite chilling and snow generation part of the system 10, and a fan 46 is arranged in the composite chilling and snow generation part along the path of the air into the chiller 16 and through the snow generator 22.

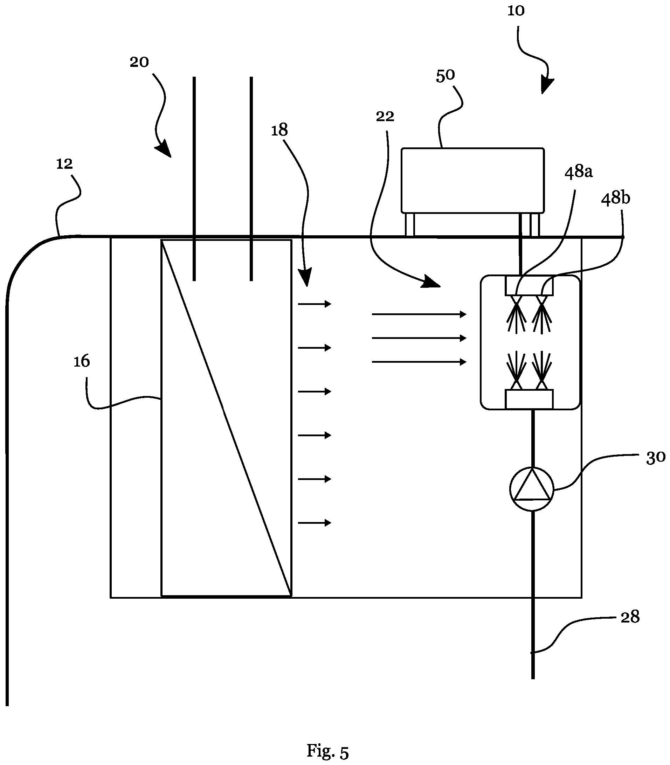

Fig. 5 illustrates another schematic example of a temporary energy storage system 10 including a separated part 32 comprising a chiller 16 and a snow generator 22. The separated part 32 is arranged inside walls of the thermal storage tank 12 and is configured to draw in air from the thermal storage tank 12 into the separated part 32 and past heat exchangers of the chiller 16. The resulting stream of cooled air 18 may stream through an opening of the separated part 32 into the thermal storage tank 12 while passing a plurality of nozzles 48a, 48b of the snow generator 22.

The plurality of nozzles 48a, 48b of the snow generator 22 may generate a mist of snow nuclei and water droplets into the stream of cooled air 18 by expanding compressed air supplied via a compressor 50. As illustrated in Fig. 5, the compressor 50 may be arranged outside of the thermal storage tank 12 and the compressed air may be guided towards the plurality of nozzles 48a, 48b into the thermal storage tank 12. Accordingly, heat generated due to the operation of the compressor 50 can be exchanged with the surrounding environment, and may not directly heat components of the temporary energy storage system 10. A thermal efficiency of the snowmaking process of the snow generator 22 may accordingly be improved. In some embodiments, the compressor 50 or conduits from the compressor 50 into the thermal storage tank 12 are coupled to the chiller 16, such that the compressed air is cooled prior to ejection through the plurality of nozzles 48a, 48b.

Other heat generating components, such as the pump 30, may similarly be arranged outside of the thermal storage tank 12 and/or coupled to the chiller 16, such that the thermal efficiency of the system 10 can be further improved.

In some embodiments, the temporary energy storage system 10 is further coupled to a heat pump, such that the temporary energy storage system 10 can also act as an artificial heat source for the heat pump in a composite power-to-heat and power-to-cold system.

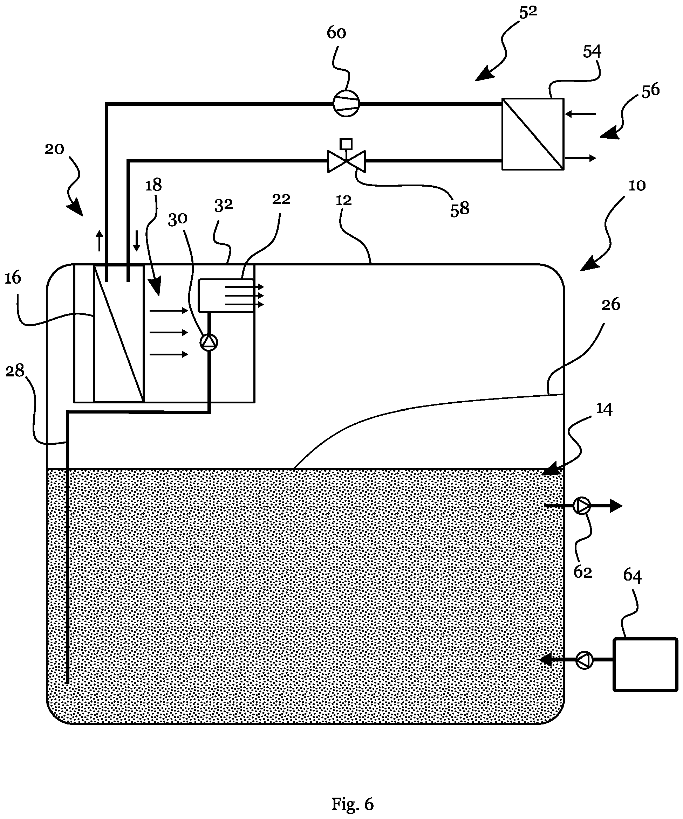

Fig. 6 illustrates an example of a temporary energy storage system 10, similar to the example illustrated in Fig. 1, wherein the chiller 16 comprises an evaporator of a heat pump 52. The evaporator may be coupled via refrigerant conduits 20 to a condenser 54 of the heat pump 52 to transfer heat towards an external heating circuit 56. The refrigerant of the heat pump 52 may be passed through an expansion valve 58 before arriving at the evaporator in liquid form. In the evaporator, heat may be absorbed from the chiller 16 for evaporating the refrigerant in the refrigerant conduits 20. The refrigerant may then be compressed by a heat pump compressor 60 for providing a heated refrigerant towards the condenser 54 at an opposite (hot) side of the heat pump 52, where the refrigerant is condensed while heat is supplied towards the external heating circuit 56.

Hence, the chiller 16 and the associated temporary energy storage 10 may act as a heat source of the heat pump 52, wherein the thermal energy extracted from the chiller 16 by the heat pump 52 cools the air/water 14 in the thermal storage tank 12 and is employed to create snow particles 24 in the thermal storage tank 12 for forming snow layer 26 on the water 14. The latent heat stored in the crystallized water may then be provided to cold consumers on demand by heat exchange with the water 14, or may be retained in the thermal storage tank 12 at comparatively high storage density.

When the snow layer 26 accumulates in the thermal storage tank 12, e.g. when the demand for heat exceeds the demand for cold energy, the water/ice-slurry mixture 14 may be pumped out of the thermal storage tank 12 towards an external reservoir, such as an artificial lake (not shown), via a pump 62. The thermal storage tank 12 may be subsequently filled with water from an external reservoir 64, such as a lake or river, in order to continue operating as a fixed temperature heat source for the heat pump 52, effectively reducing the installation cost of the heat pump 52.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: temporary energy storage system
- 12: thermal storage tank
- 14: water/ice-slurry mixture
- 16: chiller
- 18: cooled air
- 20: refrigerant conduits
- 22: snow generator
- 24: snow particles
- 26: snow layer
- 28: conduit
- 30: pump
- 32: separated part of the thermal storage tank
- 34: agitator
- 36: extraction conduits
- 38: heat exchanger
- 40: external conduits
- 42: return conduits
- 44: sprinkler
- 46: fan
- 48a, 48b: nozzles
- 50: compressor
- 52: heat pump
- 54: condenser
- 56: external heating circuit
- 58: expansion valve
- 60: heat pump compressor
- 62: pump
- 64: external reservoir

## Claims

1. A temporary energy storage system (10), the system (10) comprising a thermal storage tank (12) for storing water (14);
a chiller (16) comprising an evaporator of a heat pump (52) configured for generating cooled air (18) in the thermal storage tank (12); and
a snow generator (22) configured for generating snow particles (24) suspended in the cooled air (18), such that the snow particles (24) settle on the water (14) stored in the thermal storage tank (12) for forming a snow layer (26) on the water (14),
wherein the chiller (16) and the snow generator (22) are arranged in a separated part (32) of the temporary energy storage system (10), and
wherein the snow generator (22) comprises a fan (46) for generating a stream of cooled air (18) from the chiller (16) through the snow generator (22) and out of the separated part (32) into the thermal storage tank (12).

2. The temporary energy storage system (10) of claim 1, wherein the snow generator (22) comprises a nucleation nozzle (48a, 48b) for ejecting air and/or water (14), such that snow nuclei are formed in the cooled air (18) for aggregating snow particles (24),
wherein the snow generator (22) in particular comprises a compressor (50) for generating compressed air, wherein the compressed air is expanded through the nucleation nozzle (48a, 48b) to generate snow nuclei for aggregating snow particles (24).

3. The temporary energy storage system (10) of any one of the preceding claims, wherein the fan (46) draws in the cooled air (18) from the chiller (16) for blowing a mist of cooled air (18) and snow nuclei into the thermal storage tank (12) thereby aggregating snow particles (24) within said mist in the thermal storage tank (12).

4. The temporary energy storage system (10) of any one of the preceding claims, wherein the snow generator (22) draws in water (14) from the thermal storage tank (12) for generating snow particles (24).

5. The temporary energy storage system (10) of any one of the preceding claims, further comprising a sprinkler (44) for wetting the snow layer (26), wherein the sprinkler (44) in particular draws in water (14) from the thermal storage tank (12) for wetting the snow layer (26) with said water (14); and/or
wherein the system (10) further comprises an agitator (34) to agitate the water (14) in the thermal storage tank (12), such that the snow layer (26) is displaced in the thermal storage tank (12) and/or mixed with the water (14).

6. The temporary energy storage system (10) of any one of the preceding claims, wherein the thermal storage tank (12) is coupled to conduits (36) for extracting the water (14) from the thermal storage tank (12), wherein the conduits (36) are in particular coupled to a heat exchanger (38) to cool a fluid in an external cooling system (40); and/or
wherein the chiller (16) comprises an evaporator of a heat pump (52); and/or
wherein the system (10) is configured to exchange the water (14) with an external reservoir (64).

7. The temporary energy storage system (10) of any one of the preceding claims, wherein the thermal storage tank (12) comprises artificial snow nuclei or a snow inducer, in particular snow inducing proteins, for increasing a nucleation temperature of the snow particles (24).

8. The temporary energy storage system (10) of any one of the preceding claims, wherein the thermal storage tank (12) further comprises a heat exchanger to directly exchange heat with the water (14) for cooling said water (14).

9. A method for temporarily storing energy in the temporary energy storage system of any one of claims 1-8, the method comprising:
providing water (14) in a thermal storage tank (12),
generating cooled air (18) in a separated part (32) using a chiller (16) comprising an evaporator of a heat pump (52),
generating, with a fan (46), a stream of cooled air (18) from the chiller (16) through a snow generator (22) and out of the separated part (32) into the thermal storage tank (12), and
generating , with the snow generator (22), snow particles (24) suspended in the stream of cooled air (18), such that the snow particles (24) settle on the water (14) stored in the thermal storage tank (12) and thereby forming a snow layer (26) on the water (14).

10. The method of claim 9, further comprising wetting the snow layer (26) with the water (14); and/or
wherein the method further comprises agitating the water (14), such that the snow layer (26) is displaced in the thermal storage tank (12) and/or mixed with the water (14).

11. The method of claim 9 or 10, wherein the fan (46) draws in the cooled air (18) from the chiller (16) for blowing a mist of cooled air (18) and snow nuclei into the thermal storage tank (12) thereby aggregating snow particles (24) within said mist in the thermal storage tank (12).

12. The method of any one of claims 9 to 11, further comprising forming snow nuclei in the cooled air (18) for aggregating snow particles (24) by ejecting air and/or water (14) through a nucleation nozzle (48a, 48b);
wherein the method in particular further comprises expanding compressed air through the nucleation nozzle (48a, 48b) to generate snow nuclei for aggregating snow particles (24).

13. The method of any one of claims 9 to 12, further comprising drawing in water (14) from the thermal storage tank (12) for generating snow particles (24).

14. The method of any one of claims 9 to 13, further comprising adding artificial snow nuclei or a snow inducer to the water (14), in particular snow inducing proteins, for increasing a nucleation temperature of the snow particles (24).

15. The method of any one of claims 9 to 14, further comprising extracting the water (14) from the thermal storage tank (12) through conduits (36), wherein the conduits (36) are in particular coupled to a heat exchanger (38) to cool a fluid in an external cooling system (10); and/or
wherein the method further comprises driving an evaporator of a heat pump (52) for generating the cooled air (18) at the evaporator; and/or
wherein the method further comprises exchanging the water (14) with an external reservoir (64).

## Patentansprüche

1. Temporäres Energiespeichersystem (10), wobei das System (10) Folgendes umfasst:
einen thermischen Speichertank (12) zum Speichern von Wasser (14);
einen Kühler (16), der einen Verdampfer einer Wärmepumpe (52) umfasst, welcher zum Erzeugen von gekühlter Luft (18) in dem thermischen Speichertank (12) eingerichtet ist; und
einen Schneeerzeuger (22), der zum Erzeugen von in der gekühlten Luft (18) suspendierten Schneepartikeln (24) eingerichtet ist, sodass sich die Schneepartikel (24) auf dem in dem thermischen Speichertank (12) gespeicherten Wasser (14) absetzen, um eine Schneeschicht (26) auf dem Wasser (14) zu bilden,
wobei der Kühler (16) und der Schneeerzeuger (22) in einem getrennten Teil (32) des temporären Energiespeichersystems (10) angeordnet sind, und
wobei der Schneeerzeuger (22) ein Gebläse (46) zum Erzeugen eines Stroms von gekühlter Luft (18) von dem Kühler (16) durch den Schneeerzeuger (22) und aus dem getrennten Teil (32) heraus in den thermischen Speichertank (12) umfasst.

2. Temporäres Energiespeichersystem (10) nach Anspruch 1, wobei der Schneeerzeuger (22) eine Nukleationsdüse (48a, 48b) zum Ausstoßen von Luft und/oder Wasser (14) umfasst, sodass Schneekeime in der gekühlten Luft (18) zum Aggregieren von Schneepartikeln (24) gebildet werden,
wobei der Schneeerzeuger (22) insbesondere einen Kompressor (50) zum Erzeugen von komprimierter Luft umfasst, wobei die komprimierte Luft durch die Nukleationsdüse (48a, 48b) expandiert wird, um Schneekeime zum Aggregieren von Schneepartikeln (24) zu erzeugen.

3. Temporäres Energiespeichersystem (10) nach einem der vorhergehenden Ansprüche, wobei das Gebläse (46) die gekühlte Luft (18) von dem Kühler (16) ansaugt, um einen Nebel aus gekühlter Luft (18) und Schneekeimen in den thermischen Speichertank (12) zu blasen, wodurch Schneepartikel (24) innerhalb des Nebels in dem thermischen Speichertank (12) aggregiert werden.

4. Temporäres Energiespeichersystem (10) nach einem der vorhergehenden Ansprüche, wobei der Schneeerzeuger (22) Wasser (14) aus dem thermischen Speichertank (12) zum Erzeugen von Schneepartikeln (24) ansaugt.

5. Temporäres Energiespeichersystem (10) nach einem der vorhergehenden Ansprüche, ferner umfassend einen Sprinkler (44) zum Benetzen der Schneeschicht (26), wobei der Sprinkler (44) insbesondere Wasser (14) aus dem thermischen Speichertank (12) zum Benetzen der Schneeschicht (26) mit dem Wasser (14) ansaugt; und/oder wobei das System (10) ferner ein Rührwerk (34) zum Rühren des Wassers (14) in dem thermischen Speichertank (12) umfasst, sodass die Schneeschicht (26) in dem thermischen Speichertank (12) bewegt und/oder mit dem Wasser (14) gemischt wird.

6. Temporäres Energiespeichersystem (10) nach einem der vorhergehenden Ansprüche, wobei der thermische Speichertank (12) mit Leitungen (36) zum Extrahieren des Wassers (14) aus dem thermischen Speichertank (12) gekoppelt ist, wobei die Leitungen (36) insbesondere mit einem Wärmetauscher (38) zum Kühlen eines Fluids in einem externen Kühlsystem (40) gekoppelt sind; und/oder
wobei der Kühler (16) einen Verdampfer einer Wärmepumpe (52) umfasst; und/oder
wobei das System (10) zum Austauschen des Wassers (14) mit einem externen Reservoir (64) eingerichtet ist.

7. Temporäres Energiespeichersystem (10) nach einem der vorhergehenden Ansprüche, wobei der thermische Speichertank (12) künstliche Schneekeime oder einen Schneeinduktor, insbesondere schneeinduzierende Proteine, zum Erhöhen einer Nukleationstemperatur der Schneepartikel (24) umfasst.

8. Temporäres Energiespeichersystem (10) nach einem der vorhergehenden Ansprüche, wobei der thermische Speichertank (12) ferner einen Wärmetauscher zum direkten Austauschen von Wärme mit dem Wasser (14) zum Kühlen des Wassers (14) umfasst.

9. Verfahren zum temporären Speichern von Energie in dem temporären Energiespeichersystem nach einem der Ansprüche 1-8, wobei das Verfahren Folgendes umfasst:
Bereitstellen von Wasser (14) in einem thermischen Speichertank (12),
Erzeugen von gekühlter Luft (18) in einem getrennten Teil (32) unter Verwendung eines Kühlers (16), der einen Verdampfer einer Wärmepumpe (52) umfasst,
Erzeugen, mit einem Gebläse (46), eines Stroms von gekühlter Luft (18) von dem Kühler (16) durch einen Schneeerzeuger (22) und aus dem getrennten Teil (32) heraus in den thermischen Speichertank (12), und
Erzeugen, mit dem Schneeerzeuger (22), von in dem Strom von gekühlter Luft (18) suspendierten Schneepartikeln (24), sodass sich die Schneepartikel (24) auf dem in dem thermischen Speichertank (12) gespeicherten Wasser (14) absetzen und dadurch eine Schneeschicht (26) auf dem Wasser (14) bilden.

10. Verfahren nach Anspruch 9, ferner umfassend das Benetzen der Schneeschicht (26) mit dem Wasser (14); und/oder
wobei das Verfahren ferner das Rühren des Wassers (14) umfasst, sodass die Schneeschicht (26) in dem thermischen Speichertank (12) bewegt und/oder mit dem Wasser (14) gemischt wird.

11. Verfahren nach Anspruch 9 oder 10, wobei das Gebläse (46) die gekühlte Luft (18) von dem Kühler (16) ansaugt, um einen Nebel aus gekühlter Luft (18) und Schneekeimen in den thermischen Speichertank (12) zu blasen, wodurch Schneepartikel (24) innerhalb des Nebels in dem thermischen Speichertank (12) aggregiert werden.

12. Verfahren nach einem der Ansprüche 9 bis 11, ferner umfassend das Bilden von Schneekeimen in der gekühlten Luft (18) zum Aggregieren von Schneepartikeln (24) durch Ausstoßen von Luft und/oder Wasser (14) durch eine Nukleationsdüse (48a, 48b);
wobei das Verfahren insbesondere ferner das Expandieren von komprimierter Luft durch die Nukleationsdüse (48a, 48b) umfasst, um Schneekeime zum Aggregieren von Schneepartikeln (24) zu erzeugen.

13. Verfahren nach einem der Ansprüche 9 bis 12, ferner umfassend das Ansaugen von Wasser (14) aus dem thermischen Speichertank (12) zum Erzeugen von Schneepartikeln (24).

14. Verfahren nach einem der Ansprüche 9 bis 13, ferner umfassend das Hinzufügen von künstlichen Schneekeimen oder einem Schneeinduktor zu dem Wasser (14), insbesondere schneeinduzierenden Proteinen, zum Erhöhen einer Nukleationstemperatur der Schneepartikel (24).

15. Verfahren nach einem der Ansprüche 9 bis 14, ferner umfassend das Extrahieren des Wassers (14) aus dem thermischen Speichertank (12) durch Leitungen (36), wobei die Leitungen (36) insbesondere mit einem Wärmetauscher (38) zum Kühlen eines Fluids in einem externen Kühlsystem (10) gekoppelt sind; und/oder
wobei das Verfahren ferner das Betreiben eines Verdampfers einer Wärmepumpe (52) zum Erzeugen der gekühlten Luft (18) an dem Verdampfer umfasst; und/oder
wobei das Verfahren ferner das Austauschen des Wassers (14) mit einem externen Reservoir (64) umfasst.

## Revendications

1. Système de stockage d'énergie temporaire (10), le système (10) comprenant un réservoir de stockage thermique (12) pour stocker de l'eau (14) ;
un refroidisseur (16) comprenant un évaporateur d'une pompe à chaleur (52) configuré pour générer de l'air refroidi (18) dans le réservoir de stockage thermique (12) ; et
un générateur de neige (22) configuré pour générer des particules de neige (24) en suspension dans l'air refroidi (18), de telle sorte que les particules de neige (24) se déposent sur l'eau (14) stockée dans le réservoir de stockage thermique (12) pour former une couche de neige (26) sur l'eau (14),
dans lequel le refroidisseur (16) et le générateur de neige (22) sont agencés dans une partie séparée (32) du système de stockage d'énergie temporaire (10), et
dans lequel le générateur de neige (22) comprend un ventilateur (46) pour générer un courant d'air refroidi (18) à partir du refroidisseur (16) à travers le générateur de neige (22) et hors de la partie séparée (32) dans le réservoir de stockage thermique (12).

2. Système de stockage d'énergie temporaire (10) selon la revendication 1, dans lequel le générateur de neige (22) comprend une buse de nucléation (48a, 48b) pour éjecter de l'air et/ou de l'eau (14), de telle sorte que des noyaux de neige sont formés dans l'air refroidi (18) pour agréger les particules de neige (24),
dans lequel le générateur de neige (22) comprend en particulier un compresseur (50) pour générer de l'air comprimé, dans lequel l'air comprimé est dilaté à travers la buse de nucléation (48a, 48b) pour générer des noyaux de neige afin d'agréger les particules de neige (24).

3. Système de stockage d'énergie temporaire (10) selon l'une quelconque des revendications précédentes, dans lequel le ventilateur (46) aspire l'air refroidi (18) en provenance du refroidisseur (16) pour souffler une brume d'air refroidi (18) et des noyaux de neige dans le réservoir de stockage thermique (12), agrégeant ainsi les particules de neige (24) à l'intérieur de ladite brume dans le réservoir de stockage thermique (12).

4. Système de stockage d'énergie temporaire (10) selon l'une quelconque des revendications précédentes, dans lequel le générateur de neige (22) aspire l'eau (14) du réservoir de stockage thermique (12) pour générer des particules de neige (24).

5. Système de stockage d'énergie temporaire (10) selon l'une quelconque des revendications précédentes, comprenant en outre un gicleur (44) pour mouiller la couche de neige (26), dans lequel le gicleur (44) aspire en particulier de l'eau (14) provenant du réservoir de stockage thermique (12) pour mouiller la couche de neige (26) avec ladite eau (14) ; et/ou
dans lequel le système (10) comprend en outre un agitateur (34) pour agiter l'eau (14) dans le réservoir de stockage thermique (12), de telle sorte que la couche de neige (26) est déplacée dans le réservoir de stockage thermique (12) et/ou mélangée avec l'eau (14).

6. Système de stockage d'énergie temporaire (10) selon l'une quelconque des revendications précédentes, dans lequel le réservoir de stockage thermique (12) est accouplé aux conduits (36) pour extraire l'eau (14) du réservoir de stockage thermique (12), dans lequel les conduits (36) sont en particulier accouplés à un échangeur de chaleur (38) pour refroidir un fluide dans un système de refroidissement externe (40) ; et/ou
dans lequel le refroidisseur (16) comprend un évaporateur d'une pompe à chaleur (52) ; et/ou
dans lequel le système (10) est configuré pour échanger l'eau (14) avec un réservoir externe (64).

7. Système de stockage d'énergie temporaire (10) selon l'une quelconque des revendications précédentes, dans lequel le réservoir de stockage thermique (12) comprend des noyaux de neige artificielle ou un inducteur de neige, en particulier de protéines inductrices de neige, pour augmenter une température de nucléation des particules de neige (24).

8. Système de stockage d'énergie temporaire (10) selon l'une quelconque des revendications précédentes, dans lequel le réservoir de stockage thermique (12) comprend en outre un échangeur de chaleur pour échanger directement de la chaleur avec l'eau (14) pour refroidir ladite eau (14).

9. Procédé pour stoker temporairement de l'énergie dans le système de stockage d'énergie temporaire selon l'une quelconque des revendications 1 à 8, le procédé comprenant :
la fourniture d'eau (14) dans un réservoir de stockage thermique (12),
la génération d'air refroidi (18) dans une partie séparée (32) en utilisant un refroidisseur (16) comprenant un évaporateur d'une pompe à chaleur (52),
la génération, avec un ventilateur (46), d'un courant d'air refroidi (18) provenant du refroidisseur (16) à travers un générateur de neige (22) et hors de la partie séparée (32) dans le réservoir de stockage thermique (12), et
la génération, avec le générateur de neige (22), de particules de neige (24) en suspension dans le courant d'air refroidi (18), de telle sorte que les particules de neige (24) se déposent sur l'eau (14) stockée dans le réservoir de stockage thermique (12), formant ainsi une couche de neige (26) sur l'eau (14),

10. Procédé selon la revendication 9, comprenant en outre le mouillage de la couche de neige (26) avec l'eau (14) ; et/ou
dans lequel le procédé comprend en outre l'agitation de l'eau (14), de telle sorte que la couche de neige (26) est déplacée dans le réservoir de stockage thermique (12) et/ou mélangée avec l'eau (14).

11. Procédé selon la revendication 9 ou 10, dans lequel le ventilateur (46) aspire l'air refroidi (18) provenant du refroidisseur (16) pour souffler une brume d'air refroidi (18) et des noyaux de neige dans le réservoir de stockage thermique (12), agrégeant ainsi les particules de neige (24) à l'intérieur de ladite brume dans le réservoir de stockage thermique (12).

12. Procédé selon l'une quelconque des revendications 9 à 11, comprenant en outre la formation de noyaux de neige dans l'air refroidi (18) pour agréger les particules de neige (24) en éjectant de l'air et/ou de l'eau (14) à travers une buse de nucléation (48a, 48b) ;
dans lequel le procédé comprend en outre en particulier la dilatation d'air comprimé à travers la buse de nucléation (48a, 48b) pour générer des noyaux de neige afin d'agréger les particules de neige (24).

13. Procédé selon l'une quelconque des revendications 9 à 12, comprenant en outre l'aspiration d'eau (14) provenant du réservoir de stockage thermique (12) pour générer des particules de neige (24).

14. Procédé selon l'une quelconque des revendications 9 à 13, comprenant en outre l'ajout de noyaux de neige artificielle ou d'un inducteur de neige à l'eau (14), en particulier de protéines inductrices de neige, pour augmenter une température de nucléation des particules de neige (24).

15. Procédé selon l'une quelconque des revendications 9 à 14, comprenant en outre l'extraction de l'eau (14) du réservoir de stockage thermique (12) à travers des conduits (36), dans lequel les conduits (36) sont en particulier accouplés à un échangeur de chaleur (38) pour refroidir un fluide dans un système de refroidissement externe (10) ; et/ou
dans lequel le procédé comprend en outre l'entraînement d'un évaporateur d'une pompe à chaleur (52) pour générer l'air refroidi (18) au niveau de l'évaporateur ; et/ou
dans lequel le procédé comprend en outre l'échange de l'eau (14) avec un réservoir externe (64).
